# EUROPÄISCHE PATENTSCHRIFT

(11) **EP 3 464 960 B1**
(45) Veröffentlichungstag und Bekanntmachung des Hinweises auf die Patenterteilung: **27.04.2022**
(21) Anmeldenummer: 17729084.8
(22) Anmeldetag: 06.06.2017
(51) Int. Cl.: F02M 59/10, F16J 15/00, F16J 15/32, F16J 15/56, F02M 59/44

(54) **KOLBENVORRICHTUNG UND PUMPENVORRICHTUNG**
PISTON DEVICE AND PUMP DEVICE
DISPOSITIF DE PISTON ET DISPOSITIF DE POMPE

(30) Priorität: 06.06.2016 DE 102016209930
(43) Veröffentlichungstag der Anmeldung: 10.04.2019
(73) Patentinhaber: ElringKlinger AG, 72581 Dettingen (DE); Elringklinger Kunststofftechnik GmbH, 74321 Bietigheim-Bissingen (DE)
(72) Erfinder: KLEIN, Patrick, 70771 Leinfelden-Echterdingen (DE); HOCKER, Klaus, 74379 Ingersheim (DE); KOPP, Fabian, 71732 Tamm (DE)
(74) Vertreter: DTS Patent- und Rechtsanwälte Schnekenbühl und Partner mbB
(86) Internationale Anmeldenummer: PCT/EP2017/063671
(87) Internationale Veröffentlichungsnummer: WO 2017/211795

(56) Entgegenhaltungen:
- WO-A1-2018/009390
- WO-A2-2013/076146
- DE-A1- 10 026 360
- DE-A1-102014 202 794
- DE-U1- 9 107 284
- US-A- 2 282 562
- US-A- 3 738 665

## Beschreibung

Die vorliegende Erfindung betrifft eine Hochdruck-Kraftstoffpumpenvorrichtung, in welcher eine Kolbenvorrichtung Anwendung findet.

Eine Kolbenvorrichtung kann insbesondere Bestandteil einer Hochdruck-Kraftstoffpumpe sein. Bei einer solchen Hochdruck-Kraftstoffpumpe kann eine effiziente Abdichtung eines Hochdruckraums erforderlich sein. Für eine solche Abdichtung kann beispielsweise die aus der EP 2 047 148 B1 bekannte Dichtungsanordnung verwendet werden.

Kraftstoffpumpen und/oder Kolbenvorrichtungen sind ferner aus folgenden Druckschriften bekannt: DE 10 2014 218 992 A1, DE 10 2012 217 260 A1, DE 10 2013 204 365 A1, DE 195 22 306 A1, DE 91 07 284 U1, WO 2013/076146 A2, DE 100 26 360 A1, US 2,282,562 A und EP 1 284 367 A1

Der vorliegenden Erfindung liegt die Aufgabe zugrunde, eine Hochdruck-Kraftstoffpumpenvorrichtung bereitzustellen, welche einfach aufgebaut ist und eine optimierte Abdichtung bietet.

Diese Aufgabe wird erfindungsgemäß durch eine Hochdruck-Kraftstoffpumpenvorrichtung gemäß dem unabhängigen Anspruch 1 gelöst.

Die Hochdruck-Kraftstoffpumpenvorrichtung umfasst eine Kolbenvorrichtung.

Die Kolbenvorrichtung umfasst ein Gehäuse, welches eine Kolbenaufnahme umfasst.

Ferner umfasst die Kolbenvorrichtung einen Kolben, welcher linear verschieblich in der Kolbenaufnahme angeordnet ist.

Zudem ist vorgesehen, dass die Kolbenvorrichtung ein Hauptdichtelement umfasst, welches einen ersten Medienraum von einem zweiten Medienraum trennt.

Die Kolbenvorrichtung umfasst ferner ein von dem Hauptdichtelement verschiedenes Zusatzdichtelement zur Abdichtung in einem Bereich zwischen dem Kolben und der Kolbenaufnahme. Insbesondere können mehrere Zusatzdichtelemente vorgesehen sein.

Es kann vorgesehen sein, dass der Kolben an einem ersten Ende des Kolbens an den ersten Medienraum und an einem zweiten Ende des Kolbens an den zweiten Medienraum angrenzt.

Ferner kann vorgesehen sein, dass der Kolben lediglich einseitig an einem ersten Ende des Kolbens an den ersten Medienraum angrenzt oder abschnittsweise oder vollständig in dem ersten Medienraum angeordnet ist. Insbesondere eine Kolbenstange zur Betätigung des Kolbens ist dann vorzugsweise durch das Hauptdichtelement hindurchgeführt und grenzt somit an den zweiten Medienraum an.

Das Hauptdichtelement kann beispielsweise zwischen dem Kolben und der Kolbenaufnahme angeordnet sein und/oder insbesondere einerseits unmittelbar an dem Kolben und andererseits unmittelbar an der Kolbenaufnahme abdichtend anliegen.

Alternativ hierzu kann vorgesehen sein, dass das Hauptdichtelement zwischen einer Kolbenstange und einem Gehäuse der Kolbenvorrichtung angeordnet ist und/oder insbesondere einerseits unmittelbar an der Kolbenstange und andererseits unmittelbar an dem Gehäuse abdichtend anliegt.

Das Hauptdichtelement der erfindungsgemäßen Kolbenvorrichtung ist insbesondere ein Dichtelement und/oder eine Dichtungsanordnung gemäß der EP 2 047 148 B1, auf welche hiermit ausdrücklich Bezug genommen und deren Inhalt hiermit durch ausdrückliche Inbezugnahme zum Bestandteil dieser Beschreibung gemacht wird.

Es kann vorgesehen sein, dass die Kolbenaufnahme eine Führungsvorrichtung umfasst, an welcher der Kolben anliegt, insbesondere unmittelbar anliegt, und mittels welcher der Kolben linear verschieblich geführt ist.

Die Führungsvorrichtung kann insbesondere ein Bestandteil oder Abschnitt des Gehäuses oder ein in das Gehäuse integriertes Zusatzbauteil sein.

Das Zusatzdichtelement liegt vorzugsweise einerseits insbesondere unmittelbar an einem Führungselement der Führungsvorrichtung und andererseits insbesondere unmittelbar an dem Kolben an.

Das Zusatzdichtelement ist vorzugsweise eine berührende Dichtung.

Die Führungsvorrichtung und der Kolben sind vorzugsweise so ausgebildet, dass zwischen der Führungsvorrichtung und dem Kolben eine Spaltdichtung gebildet ist.

Insbesondere dann, wenn mindestens ein Zusatzdichtelement vorgesehen ist, kann zur Kostenoptimierung vorzugsweise eine größere Toleranz bei der Spaltdichtung, beispielsweise ein größeres Spiel realisiert werden.

Das Führungselement ist vorzugsweise als ein Gleithohlzylinder ausgebildet.

Vorteilhaft kann es sein, wenn der Kolben zwischen zwei Endstellungen hin und her bewegbar ist.

In einer Endstellung des Kolbens, in welcher dieser maximal in Richtung des zweiten Medienraums bewegt ist, ist das Zusatzdichtelement vorzugsweise in einem dem zweiten Medienraum zugewandten Endbereich der Führungsvorrichtung angeordnet.

Insbesondere kann vorgesehen sein, dass das Zusatzdichtelement in dieser Endstellung an einen Rand des Führungselements angrenzend angeordnet ist.

Unter einem "Endbereich" der Führungsvorrichtung ist dabei insbesondere ein dem zweiten Medienraum zugewandtes letztes Drittel, letztes Viertel oder letztes Fünftel der gesamten Führungsvorrichtung, insbesondere eines Führungselements der Führungsvorrichtung, zu verstehen.

Vorteilhaft kann es sein, wenn das Zusatzdichtelement elastisch ausgebildet ist.

Das Zusatzdichtelement kann insbesondere als ein Dichtring, insbesondere als ein ringförmig geschlossener oder offener Dichtring, beispielsweise als ein ring-förmig geschlossener oder offener Kolbenring, ausgebildet sein. Vorzugsweise ist kein sonst bei Kolbenringen üblicher Stoß vorgesehen.

Vorzugsweise ist das Zusatzdichtelement schwimmend an dem Kolben und/oder der Kolbenaufnahme gelagert.

Das Zusatzdichtelement umfasst vorzugsweise ein Polytetrafluorethylen (PTFE)-Material oder ist aus einem solchen Material gebildet. Ferner kann das Zusatzdichtelement alternativ oder ergänzend vorzugsweise ein oder mehrere der folgenden Materialien umfassen oder hieraus gebildet sein: Thermoplastisches Material; metallisches Material; Fluorthermoplaste, Hochtemperatur-Thermoplaste, beispielsweise aus der Gruppe der Polyketone und/oder der Gruppe der Polyimide.

Das Zusatzdichtelement weist vorzugsweise zumindest näherungsweise einen quaderförmigen Querschnitt auf.

Ein Querschnitt ist dabei insbesondere ein senkrecht zu einer Umfangsrichtung des insbesondere ringförmigen Dichtelements genommener Querschnitt.

Vorzugsweise ist der Querschnitt in einer Ebene genommen, in welcher eine Längsmittelachse des Kolbens verläuft.

Es kann vorgesehen sein, dass das Zusatzdichtelement einen oder mehrere in einer radialen Richtung nach außen ragende Vorsprünge aufweist. Der oder die Vorsprünge bilden vorzugsweise eine oder mehrere Dichtkanten zur Anlage des Zusatzdichtelements an der Kolbenaufnahme.

Vorzugsweise ist der Vorsprung ringförmig geschlossen ausgebildet, so dass das Zusatzdichtelement insbesondere gleichmäßig über die Umfangsrichtung hinweg in radialer Richtung nach außen an die Kolbenaufnahme, insbesondere die Führungsvorrichtung, anlegbar ist.

Es kann vorgesehen sein, dass die Dichtkante ringförmig geschlossen ist, so dass das Zusatzdichtelement insbesondere längs der Umfangsrichtung gleichmäßig radial nach innen an den Kolben anlegbar ist.

Erfindungsgemäß ist vorgesehen, dass das Zusatzdichtelement in einer ringförmigen Nut aufgenommen ist. Die Nut ist dabei in dem Kolben angeordnet und/oder ausgebildet.

Vorzugsweise weist die Nut einen im Wesentlichen rechteckigen Querschnitt auf.

Günstig kann es sein, wenn der Kolben als ein Plunger ausgebildet ist.

Bei einem solchen Plunger sind insbesondere der Kolben und die Kolbenstange als ein Bauteil ausgebildet. Der Plunger weist insbesondere über seine gesamte Länge hinweg einen im Wesentlichen konstanten Querschnitt auf.

Es kann jedoch auch vorgesehen sein, dass der Kolben ein herkömmlicher Kolben mit zugehöriger Kolbenstange ist.

Der Kolben ist vorzugsweise zumindest abschnittsweise mit einer Beschichtung, insbesondere einer Gleitbeschichtung, versehen.

Beispielsweise ist der Kolben mit einer DLC-Beschichtung (Diamond-like Carbon-Beschichtung) versehen.

Günstig kann es sein, wenn das Zusatzdichtelement einen Hochdruckraum des ersten Medienraums von einem Niederdruckraum des ersten Medienraums trennt.

Insbesondere kann mittels des Zusatzdichtelements ein erhöhter Druckabfall längs des Spalts zwischen dem Kolben und der Kolbenaufnahme ausgehend von dem Hochdruckraum erzielt werden. Hierdurch kann vorzugsweise eine Druckbelastung des Hauptdichtelements reduziert werden, was insbesondere eine Dichtwirkung und Standfestigkeit desselben optimieren kann.

Die Hochdruck-Kraftstoffpumpenvorrichtung umfasst eine Hochdruckkammer, deren freies Innenraumvolumen durch eine lineare Verschiebung des Kolbens alternierend vergrößerbar oder verkleinerbar ist.

Zudem umfasst die Hochdruck-Kraftstoffpumpenvorrichtung eine Zuführleitung zur Zuführung eines ersten Mediums zu der Hochdruckkammer und eine Abführleitung zur Abführung des ersten Mediums aus der Hochdruckkammer.

Der Kolben ist insbesondere in die Hochdruckkammer hineinbewegbar und aus derselben herausbewegbar.

Unter einem "freien Innenraumvolumen" der Hochdruckkammer ist insbesondere ein mit einem Fluid, insbesondere einer Flüssigkeit, füllbares Innenraumvolumen der Hochdruckkammer zu verstehen.

Der Innenraum der Hochdruckkammer ist insbesondere Teil eines Hochdruckraums.

Vorzugsweise umfasst die Hochdruck-Kraftstoffpumpenvorrichtung eine Antriebsvorrichtung, insbesondere einen Exzenterantrieb oder Nockenantrieb, zum linearen Verschieben des Kolbens.

Ferner kann vorgesehen sein, dass die Hochdruck-Kraftstoffpumpenvorrichtung ein Federelement umfasst, mittels welchem der Kolben an ein Betätigungselement der Antriebsvorrichtung anpressbar ist. Das Betätigungselement ist insbesondere ein Exzenterelement des Exzenterantriebs oder Nockenelement des Nockenantriebs.

Vorteilhaft kann es sein, wenn die Hochdruck-Kraftstoffpumpenvorrichtung einen ersten Medienraum umfasst, welcher mittels einer Führungsvorrichtung zur Führung des Kolbens und/oder mittels eines Dichtelements in einen Hochdruckraum und einen Niederdruckraum unterteilt ist.

Günstig kann es sein, wenn der erste Medienraum mittels eines oder mehrerer Zusatzdichtelemente in einen Hochdruckraum und einen Niederdruckraum unterteilt ist.

Die Hochdruck-Kraftstoffpumpenvorrichtung umfasst vorzugsweise eine Verbindungsleitung, mittels welcher Medium beispielsweise aus dem Niederdruckraum und/oder aus der Kolbenaufnahme abführbar ist.

Beispielsweise kann vorgesehen sein, dass die Hochdruck-Kraftstoffpumpenvorrichtung eine Verbindungsleitung umfasst, welche den Niederdruckraum und/oder die Kolbenaufnahme fluidwirksam mit der Zuführleitung verbindet.

Bei einer Ausgestaltung der Erfindung kann vorgesehen sein, dass die Hochdruck-Kraftstoffpumpenvorrichtung eine der Verbindungsleitung zugeordnete Ventilvorrichtung umfasst, welche insbesondere derart ausgebildet und/oder angeordnet ist, dass sich diese bei einer Bewegung des Kolbens aus der Hochdruckkammer heraus öffnet und ein im Niederdruckraum angeordnetes Medium und/oder ein in der Kolbenaufnahme, insbesondere im Bereich eines Führungselements, angeordnetes Medium über die Verbindungsleitung aus dem Niederdruckraum und/oder aus der Kolbenaufnahme abführbar und/oder der Zuführleitung zuführbar ist.

Es kann vorgesehen sein, dass die Bewegung des Kolbens aus der Hochdrucckammer heraus zu einem Druckanstieg im Niederdruckraum und/oder in der Kolbenaufnahme, insbesondere im Bereich eines Führungselements, führt. Hierdurch kann sich insbesondere die Ventilvorrichtung in der Verbindungsleitung öffnen, so dass Fluid aus dem Niederdruckraum und/oder aus der Kolbenaufnahme abgeführt und hierdurch ein Maximaldruck im Niederdruckraum und/oder in der Kolbenaufnahme begrenzt werden kann.

Die Ventilvorrichtung ist insbesondere ein Rückschlagventil.

Der Hochdruckraum kann beispielsweise für Drücke von mindestens ungefähr 400 bar, beispielsweise ungefähr 500 bar ausgelegt sein, wenn die Hochdruck-Kraftstoffpumpenvorrichtung beispielsweise eine Hochdruck-Benzinpumpe ist.

Beispielsweise dann, wenn die Hochdruck-Kraftstoffpumpenvorrichtung eine Hochdruck-Dieselpumpe ist, kann der Hochdruckraum für einen Druck von mindestens ungefähr 2000 bar, beispielsweise ungefähr 3000 bar, ausgelegt sein.

Im Betrieb der Kolbenvorrichtung beträgt ein Druck im Niederdruckraum vorzugsweise höchstens ungefähr 30 bar, insbesondere höchstens ungefähr 20 bar, beispielsweise höchstens ungefähr 10 bar.

Insbesondere dann, wenn der Hochdruckraum mittels eines Zusatzdichtelements von dem Niederdruckraum getrennt ist, kann vorgesehen sein, dass ein Druck im Niederdruckraum höchstens ungefähr 10 bar, beispielsweise höchstens ungefähr 5 bar, insbesondere höchstens ungefähr 3 bar, beträgt.

Der erste Medienraum ist insbesondere ein Kraftstoffraum. Das erste Medium ist somit insbesondere Kraftstoff, beispielsweise Diesel oder Benzin.

Der zweite Medienraum ist insbesondere ein Antriebsraum, insbesondere ein Nockenantriebsraum. Das im zweiten Medienraum angeordnete Medium ist insbesondere Öl, beispielsweise Motoröl.

Bei einer Ausgestaltung der Erfindung kann vorgesehen sein, dass die Kolbenvorrichtung mehrere Dichtelemente umfasst, wobei insbesondere ein oder mehrere Hauptdichtelemente und/oder ein oder mehrere Zusatzdichtelemente vorgesehen sind.

Günstig kann es sein, wenn eine Verbindungsleitung in einem Bereich zwischen zwei längs einer Längsachse des Kolbens aufeinanderfolgenden Dichtelementen, insbesondere Zusatzdichtelementen, endet. Ein weiteres Ende ist vorzugsweise an der Zuführleitung vorgesehen.

Ein Ende der Verbindungsleitung und/oder die zwei längs einer Längsachse des Kolbens aufeinanderfolgenden Dichtelemente, insbesondere Zusatzdichtelemente, sind insbesondere derart angeordnet und/oder ausgebildet, dass bei jeder im Betrieb der Kolbenvorrichtung auftretenden Position des Kolbens in der Kolbenaufnahme das Ende der Verbindungsleitung in axialer Richtung bezogen auf die Längsachse des Kolbens stets zwischen den zwei längs einer Längsachse des Kolbens aufeinanderfolgenden Dichtelementen angeordnet ist.

Vorteilhaft kann es sein, wenn die Kolbenaufnahme, insbesondere ein Führungselement zur Führung des Kolbens, eine Vertiefung zum Aufnehmen und/oder Sammeln von Medium umfasst. Die Vertiefung ist beispielsweise eine ringförmige Nut. Mittels der Vertiefung ist vorzugsweise ein ringförmiger Sammelbereich für Medium, insbesondere erstes Medium und/oder zweites Medium, gebildet.

Eine Verbindungsleitung endet vorzugsweise in der Vertiefung, insbesondere in dem ringförmigen Sammelbereich.

Günstig kann es sein, wenn die Vertiefung, insbesondere der ringförmige Sammelbereich, und/oder die zwei längs einer Längsachse des Kolbens aufeinanderfolgenden Dichtelemente, insbesondere Zusatzdichtelemente, derart angeordnet und/oder ausgebildet sind, dass bei jeder im Betrieb der Kolbenvorrichtung auftretenden Position des Kolbens in der Kolbenaufnahme die Vertiefung, insbesondere der ringförmige Sammelbereich, in axialer Richtung bezogen auf die Längsachse des Kolbens stets zwischen den zwei längs einer Längsachse des Kolbens aufeinanderfolgenden Dichtelementen angeordnet ist.

In einer Position des Kolbens in der Kolbenaufnahme, in welcher eines der Dichtelemente, vorzugsweise ein dem Hochdruckraum zugewandt angeordnetes Dichtelement, dem Ende der Verbindungsleitung und/oder der Vertiefung am nächsten ist, beträgt der Abstand zwischen diesem Dichtelement und dem Ende der Verbindungsleitung und/oder der Vertiefung vorzugsweise mindestens ungefähr 0,2 mm, insbesondere mindestens ungefähr 0,5 mm, vorzugsweise mindestens ungefähr 1 mm. Ferner kann der Abstand mindestens ungefähr das 5-Fache oder mindestens ungefähr das 10-Fache eines Spiels zwischen dem Kolben und der Kolbenaufnahme und/oder dem Kolben und dem Dichtelement, insbesondere bezüglich der axialen und/oder radialen Richtung, betragen.

Alternativ oder ergänzend hierzu kann vorgesehen sein, dass sich ein Ende der Verbindungsleitung und/oder die Vertiefung einerseits und eine Nut zur Aufnahme eines Dichtelements, insbesondere eines Zusatzdichtelements, andererseits zumindest teilweise in axialer Richtung bezüglich der Längsachse des Kolben überlappen, wenn der Kolben in einer Position in der Kolbenaufnahme angeordnet ist, in welcher das Dichtelement, vorzugsweise ein dem Niederdruckraum zugewandt angeordnetes Dichtelement, dem Ende der Verbindungsleitung und/oder der Vertiefung am nächsten ist.

Eine Hublänge des Kolbens, das heißt der Abstand zwischen den zwei am weitesten voneinander entfernten Positionen des Kolbens in der Kolbenaufnahme, ist vorzugsweise geringer als ein Abstand der beiden längs einer Längsachse des Kolbens aufeinanderfolgenden Dichtelemente, insbesondere Zusatzdichtelemente.

Vorzugsweise sind beide Dichtelemente, insbesondere Zusatzdichtelemente, an dem Kolben festgelegt, insbesondere in in dem Kolben angeordneten Nuten festgelegt.

Es kann jedoch auch vorgesehen sein, dass ein Zusatzdichtelement, insbesondere ein dem Niederdruckraum zugewandtes Zusatzdichtelement, als eine Stangendichtung ausgebildet ist, welche insbesondere ortsfest in einer Nut in der Kolbenaufnahme angeordnet ist.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Schnitt durch eine erste Ausführungsform einer Pumpenvorrichtung, welche eine Kolbenvorrichtung mit einem Hauptdichtelement und einem Zusatzdichtelement umfasst;
- Fig. 2: eine der Fig. 1 entsprechende schematische Darstellung einer zweiten Ausführungsform einer Pumpenvorrichtung, bei welcher eine alternative Ausgestaltung des Hauptdichtelements vorgesehen ist;
- Fig. 3: eine der Fig. 1 entsprechende schematische Darstellung einer dritten Ausführungsform einer Pumpenvorrichtung, bei welcher eine Verbindungsleitung zwischen einem Niederdruckraum und einer Zuführleitung vorgesehen ist;
- Fig. 4: eine vergrößerte Darstellung eines an einem Kolben angeordneten Zusatzdichtelements;
- Fig. 5: eine schematische Schnittdarstellung einer alternativen Ausgestaltung eines Zusatzdichtelements, bei welcher ein radial nach außen ragender Vorsprung vorgesehen ist, welcher eine Dichtkante bildet;

- Fig. 6: eine schematische Schnittdarstellung einer alternativen Ausgestaltung eines Zusatzdichtelements, bei welcher abgeschrägte radial äußere Kanten vorgesehen sind;
- Fig. 7: eine schematische Schnittdarstellung einer alternativen Ausgestaltung eines Zusatzdichtelements, bei welcher eine radial äußere Oberfläche die Form einer Oberfläche eines Kegelstumpfes aufweist;
- Fig. 8: eine schematische Schnittdarstellung einer alternativen Ausgestaltung eines Zusatzdichtelements, bei welcher eine Stufenform vorgesehen ist; und
- Fig. 9: eine vergrößerte Schnittdarstellung einer alternativen Ausgestaltung eines Zusatzdichtelements im montierten Zustand desselben, wobei das Zusatzdichtelement zumindest näherungsweise kegelstumpfmantelförmig ausgebildet ist.

Gleiche oder funktional äquivalente Elemente sind in sämtlichen Figuren mit denselben Bezugszeichen versehen.

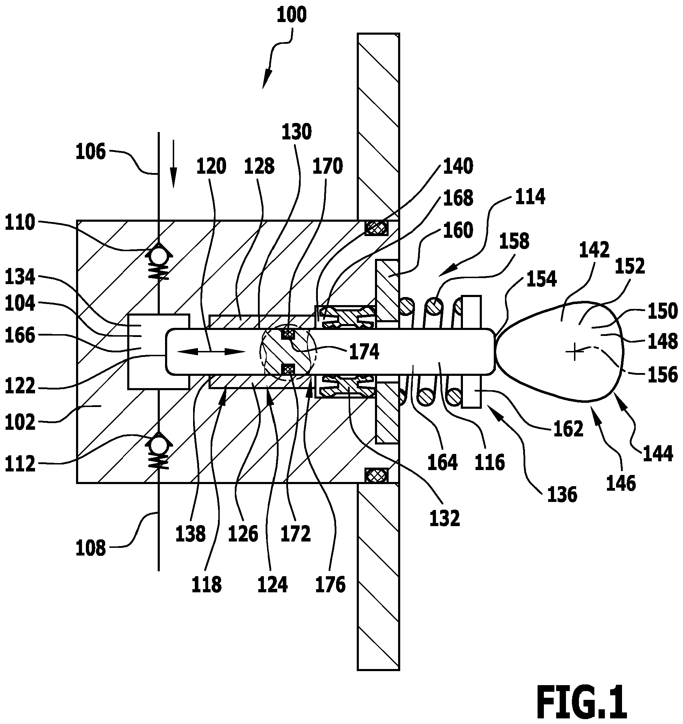

Eine in Fig. 1 dargestellte erste Ausführungsform einer als Ganzes mit 100 bezeichneten Pumpenvorrichtung findet beispielsweise als Hochdruck-Kraftstoffpumpe in Kraftfahrzeugen Anwendung.

Die Pumpenvorrichtung 100 umfasst ein Gehäuse 102, welches eine Hochdruckkammer 104 umgibt.

Mittels einer Zuführleitung 106 der Pumpenvorrichtung 100 kann der Hochdruckkammer 104 ein Medium, insbesondere Kraftstoff, zugeführt werden.

Über eine Abführleitung 108 kann das Medium aus der Hochdruckkammer 104 abgeführt werden.

In der Zuführleitung 106 ist vorzugsweise ein Einlassventil 110 angeordnet.

In der Abführleitung 108 ist vorzugsweise ein Auslassventil 112 angeordnet.

Die Pumpenvorrichtung 100 umfasst ferner eine Kolbenvorrichtung 114.

Die Kolbenvorrichtung 114 umfasst einen Kolben 116, welcher linear verschieblich in einer Kolbenaufnahme 118 angeordnet ist.

Der Kolben 116 ist dabei insbesondere derart verschieblich an dem Gehäuse 102 angeordnet, dass dieser längs seiner Längsachse 120 alternierend in die Hochdruckkammer 104 hinein- und aus der Hochdruckkammer 104 herausbewegbar ist.

Mittels des Kolbens 116 kann somit insbesondere ein mit dem Medium zu füllendes freies Innenraumvolumen der Hochdruckkammer 104 variiert werden.

Durch geeignete Ausgestaltung und/oder Steuerung des Einlassventils 110 und/oder des Auslassventils 112 kann hierdurch ein hoher Druck in der Hochdruckkammer 104 erzeugt werden, um insbesondere unter hohem Druck stehenden Kraftstoff zu Brennkammern einer Motorvorrichtung zuführen zu können.

Der Kolben 116 ragt dabei insbesondere mit einem ersten Ende 122 des Kolbens 116 in die Hochdruckkammer 104 hinein.

Die Kolbenvorrichtung 114 umfasst vorzugsweise eine Führungsvorrichtung 124 zur Führung des Kolbens 116.

Die Führungsvorrichtung 124 umfasst insbesondere ein Führungselement 126, welches insbesondere als Gleithohlzylinder 128 ausgebildet ist.

Die Führungsvorrichtung 124, insbesondere das Führungselement 126 ist insbesondere Bestandteil der Kolbenaufnahme 118.

Zwischen der Kolbenaufnahme 118 und dem Kolben 116 ist insbesondere eine Spaltdichtung 130 gebildet.

Mittels der Spaltdichtung 130 kann vorzugsweise bewirkt werden, dass lediglich geringe Mengen des in der Hochdruckkammer 104 angeordneten Mediums durch die Bewegung des Kolbens 116 aus der Hochdruckkammer 104 abgeführt werden.

Insbesondere kann mittels der Spaltdichtung 130 ein in der Hochdruckkammer 104 herrschender hoher Druck abgebaut werden, um letztlich einen Druck auf einer der Hochdruckkammer 104 abgewandten Seite der Führungsvorrichtung 124 zu minimieren.

Die Kolbenvorrichtung 114 umfasst insbesondere ein Hauptdichtelement 132.

Das Hauptdichtelement 132 ist vorzugsweise zwischen dem Kolben 116 und dem Gehäuse 102, insbesondere der Kolbenaufnahme 118, angeordnet.

Das Hauptdichtelement 132 ist insbesondere im Wesentlichen ringförmig ausgebildet.

Insbesondere ist das Hauptdichtelement 132 ein Dichtelement gemäß einer der in der EP 2 047 148 B1 beschriebenen Ausführungsformen.

Der Kolben 116 ist insbesondere durch das Hauptdichtelement 132 hindurchgeführt, so dass ein radial innenliegender Bereich des Hauptdichtelements 132 unmittelbar an dem Kolben 116 anliegt.

Ein radial äußerer Dichtbereich des Hauptdichtelements 132 liegt insbesondere unmittelbar an dem Gehäuse 102, beispielsweise an der Kolbenaufnahme 118, an.

Mittels des Hauptdichtelements 132 wird insbesondere ein erster Medienraum 134 von einem zweiten Medienraum 136 fluidwirksam getrennt.

Der erste Medienraum 134 ist insbesondere derjenige Raum, welcher mit dem in der Hochdruckkammer 104 angeordneten Medium, insbesondere Kraftstoff, gefüllt wird oder in welchen dieses Medium in einem Normalbetrieb der Pumpenvorrichtung 100 eindringen kann.

Zu dem ersten Medienraum 134 zählt somit insbesondere die Hochdrucckammer 104, ein Spalt 138 zwischen dem Kolben 116 und der Kolbenaufnahme 118 und ein beispielsweise ringförmiger Bereich 140 zwischen dem Führungselement 126 der Führungsvorrichtung 124 und dem Hauptdichtelement 132.

Der zweite Medienraum 136 ist insbesondere ein Raum, in welchem eine Antriebsvorrichtung 142 zum Antreiben des Kolbens 116 angeordnet ist.

Die Antriebsvorrichtung 142 ist hier nur beispielhaft dargestellt und beschrieben und kann nach Bedarf weitere oder zusätzliche Elemente wie Wälzlager, Scheiben, Nadellager, Hülsen, Rollen, Kraftübertragungselemente, wie sie bei Exzenter oder Nockenantrieben Verwendung finden, umfassen.

Die Antriebsvorrichtung 142 ist insbesondere ein Exzenterantrieb 144 oder Nockenantrieb 146.

Die Antriebsvorrichtung 142 umfasst insbesondere ein Exzenterelement 148 des Exzenterantriebs 144 oder ein Nockenelement 150 des Nockenantriebs 146.

Das Exzenterelement 148 bzw. das Nockenelement 150 bildet insbesondere ein Betätigungselement 152 zum Betätigen des Kolbens 116.

Insbesondere greift das Betätigungselement 152 an einem der Hochdrucckammer 104 abgewandten zweiten Ende 154 des Kolbens 116 an.

Das Betätigungselement 152 ist insbesondere um eine Rotationsachse 156 drehbar und durch eine exzentrische Lagerung desselben in der Lage, den Kolben 116 längs der Längsachse 120 hin und her zu bewegen.

Ein Federelement 158 der Kolbenvorrichtung 114 sorgt vorzugsweise dafür, dass der Kolben 116 stets an das Betätigungselement 152 angepresst wird.

Das Federelement 158 ist dabei insbesondere als eine Druckfeder ausgebildet und zwischen einer das Hauptdichtelement 132 festlegenden und/oder die Kolbenaufnahme 118 verschließenden Ringscheibe 160 einerseits und einer an dem zweiten Ende 154 des Kolbens 116 angeordneten Anlageplatte 162 andererseits eingeklemmt.

Bei der in Fig. 1 dargestellten ersten Ausführungsform der Pumpenvorrichtung 100 ist der Kolben 116 insbesondere als ein Plunger 164 ausgebildet.

Mittels der Führungsvorrichtung 124 und/oder mittels der Spaltdichtung 130 ist der erste Medienraum 134 vorzugsweise in einen Hochdruckraum 166 und einen Niederdruckraum 168 unterteilt.

Der Hochdruckraum 166 ist dabei insbesondere durch die Hochdruckkammer 104 gebildet.

Der Niederdruckraum 168 ist vorzugsweise der ringförmige Bereich 140 zwischen der Führungsvorrichtung 124 und dem Hauptdichtelement 132.

Ein Druckunterschied zwischen dem Hochdruckraum 166 und dem Niederdruckraum 168 ergibt sich vorzugsweise durch den Druckabbau mittels der Spaltdichtung 130.

Zur Optimierung dieses Druckabbaus und somit zur weiteren Reduktion des Drucks im Niederdruckraum 168 kann vorgesehen sein, dass die Kolbenvorrichtung 114 ein Zusatzdichtelement 170 umfasst.

Das Zusatzdichtelement 170 ist insbesondere ein Kolbenring 172, welcher eine Abdichtung zwischen dem Kolben 116 und der Kolbenaufnahme 118, insbesondere der Führungsvorrichtung 124, optimiert.

Das Zusatzdichtelement 170 ist insbesondere in einer Nut 174 in dem Kolben 116 oder in der Kolbenaufnahme 118 angeordnet.

Die Nut 174 und/oder das Zusatzdichtelement 170 weisen vorzugsweise einen im Wesentlichen rechteckigen Querschnitt auf.

Vorzugsweise ist das Zusatzdichtelement 170 zumindest abschnittsweise elastisch ausgebildet, um eine zuverlässige Anlage desselben an dem Kolben 116 und/oder der Kolbenaufnahme 118 zu erzielen. Zudem kann hierdurch vorzugsweise eine einfache Montage eines ringförmig geschlossenen Zusatzdichtelements 170 ermöglicht und/oder vereinfacht werden.

Durch die zusätzliche Abdichtung mittels des Zusatzdichtelements 170 kann insbesondere ein absoluter Druck im Niederdruckraum 168 reduziert werden, was letztlich eine Standfestigkeit und Dichtheit des Hauptdichtelements 132 erhöhen kann.

Das Zusatzdichtelement 170 ist vorzugsweise derart an dem Kolben 116 angeordnet, dass das Zusatzdichtelement 170 bei sämtlichen denkbaren Positionen des Kolbens 116 während dessen Bewegung längs der Längsachse 120 stets im Bereich der Führungsvorrichtung 124 angeordnet ist und dabei insbesondere stets an dem Führungselement 126 anliegt.

Insbesondere ist das Zusatzdichtelement 170 dabei vorzugsweise derart angeordnet, dass dieses in einer Endstellung des Kolbens 116, in welcher dieser maximal weit von der Hochdruckkammer 104 weg bewegt ist, in einem Endbereich 176 der Führungsvorrichtung 124 angeordnet ist.

Der Endbereich 176 ist insbesondere ein bezogen auf die Länge der Führungsvorrichtung 124 längs der Längsachse 120 letztes Drittel, letztes Viertel oder letztes Fünftel der Führungsvorrichtung 124 auf der dem zweiten Medienraum 136 zugewandten Seite der Führungsvorrichtung 124.

Die in Fig. 1 dargestellte erste Ausführungsform der Pumpenvorrichtung 100 funktioniert wie folgt:
Mittels der Antriebsvorrichtung 142 wird das Betätigungselement 152 in Rotation um die Rotationsachse 156 versetzt.

Durch die Form des Betätigungselements 152 und dadurch, dass der Kolben 116 mittels des Federelements 158 stets auf das Betätigungselement 152 gedrückt wird, wird der Kolben 116 in der Kolbenaufnahme 118 linear verschoben.

Insbesondere ergibt sich dabei eine Hin- und Herbewegung des Kolbens 116 längs seiner Längsachse 120.

Der Kolben 116 wird dabei alternierend in die Hochdruckkammer 104 hineinbewegt und aus derselben herausbewegt.

Dies führt dazu, dass ein mit Fluid füllbarer Innenraum der Hochdruckkammer 104 alternierend vergrößert und verkleinert wird.

Dies wiederum wird dafür genutzt, ein Medium, insbesondere Kraftstoff, über die Zuführleitung 106 anzusaugen, nämlich während des Herausbewegens des Kolbens 116 aus der Hochdruckkammer 104.

Dabei wird insbesondere das Einlassventil 110 in der Zuführleitung 106 geöffnet, beispielsweise automatisch aufgrund der herrschenden Drücke in der Zuführleitung 106 und in der Hochdruckkammer 104.

Wenn der Kolben 116 in der maximal von der Hochdruckkammer 104 wegbewegten Endstellung angeordnet ist, schließt sich das Einlassventil 110, so dass insbesondere das Medium nicht aus der Hochdruckkammer 104 zurück in die Zuführleitung 106 strömen kann.

Wenn nun der Kolben 116 zurück in die Hochdruckkammer 104 bewegt wird, sorgt dies für eine starke Druckerhöhung des Mediums in der Hochdrucckammer 104. Insbesondere können Drücke von mehreren Hundert bar oder gar mehreren Tausend bar erzeugt werden.

Durch geeignete Auswahl und/oder Einstellung des Auslassventils 112 in der Abführleitung 108 kann bei Überschreiten eines vorgegebenen Druckniveaus das unter hohem Druck stehende Medium durch Öffnen des Auslassventils 112 über die Abführleitung 108 abgeführt werden.

Dieses unter hohem Druck stehende Medium kann dann insbesondere für eine Hochdruckeinspritzung in Brennräumen von Verbrennungsmotoren genutzt werden.

Aufgrund der zwischenzeitlich in der Hochdruckkammer 104 herrschenden hohen Drücke kann es vorkommen, dass Medium aus der Hochdruckkammer 104 entweicht und längs des Kolbens 116 durch den Spalt 138 zwischen dem Kolben 116 und der Kolbenaufnahme 118 hindurchströmt.

Dies bewirkt insbesondere eine Druckerhöhung im Bereich des Hauptdichtelements 132, was letztlich zu einer reduzierten Dichtheit dieses Hauptdichtelements 132 führen oder die Nutzungsdauer dieses Hauptdichtelements 132 reduzieren kann.

Durch die Verwendung des Zusatzdichtelements 170 kann diesem Effekt zumindest teilweise entgegengewirkt werden.

Mittels des Zusatzdichtelements 170 wird insbesondere ein stärkerer Druckabfall zwischen dem Hochdruckraum 166 und dem Niederdruckraum 168 erzeugt und ein Leckagestrom längs des Kolbens 116 minimiert.

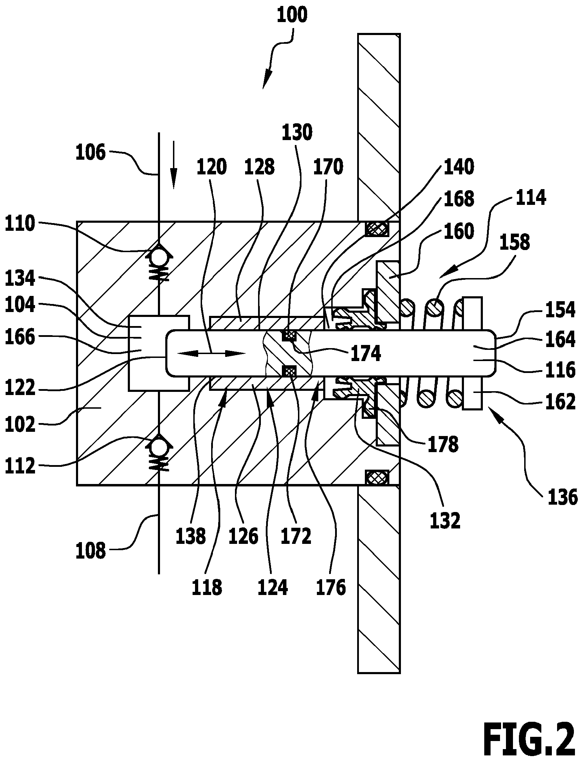

Eine in Fig. 2 dargestellte zweite Ausführungsform einer Pumpenvorrichtung 100 unterscheidet sich von der in Fig. 1 dargestellten ersten Ausführungsform im Wesentlichen dadurch, dass das Hauptdichtelement 132 einen radial nach außen ragenden ringförmigen Vorsprung 178 umfasst.

Mittels dieses Vorsprungs 178 ist das Hauptdichtelement 132 vorzugsweise zwischen einer Ringscheibe 160 und dem Gehäuse 102 der Pumpenvorrichtung 100 eingeklemmt, insbesondere um das Hauptdichtelement 132 längs der Längsachse 120 des Kolbens 116 zuverlässig festzulegen.

Im Übrigen stimmt die in Fig. 2 dargestellte zweite Ausführungsform der Pumpenvorrichtung 100 hinsichtlich Aufbau und Funktion mit der in Fig. 1 dargestellten ersten Ausführungsform überein, so dass auf deren vorstehende Beschreibung insoweit Bezug genommen wird.

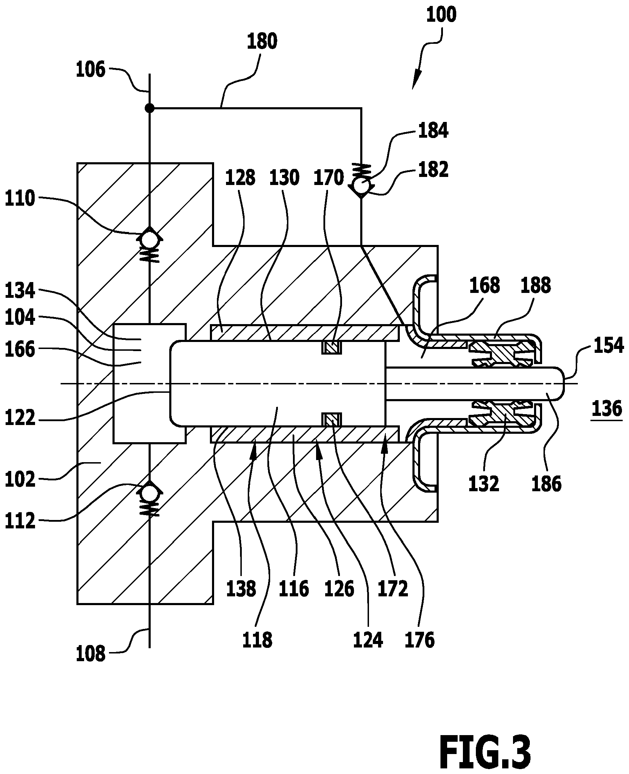

Eine in Fig. 3 dargestellte dritte Ausführungsform einer Pumpenvorrichtung 100 unterscheidet sich von der Fig. 1 dargestellten ersten Ausführungsform im Wesentlichen dadurch, dass eine Verbindungsleitung 180 vorgesehen ist.

Mittels der Verbindungsleitung 180 ist insbesondere Medium aus dem Niederdruckraum 168 abführbar.

Die Verbindungsleitung 180 umfasst vorzugsweise eine Ventilvorrichtung 182, beispielsweise ein Rückschlagventil 184, welches bei Überschreiten eines vorgegebenen Drucks im Niederdruckraum 168 öffnet und die Abführung von Medium aus dem Niederdruckraum 168 ermöglicht.

Die Verbindungsleitung 180 bildet insbesondere eine Fluidverbindung zwischen dem Niederdruckraum 168 und der Zuführleitung 106. Alternativ hierzu kann auch eine Fluidverbindung zwischen dem Niederdruckraum 168 und einem (nicht dargestellten) Mediumtank gebildet sein.

Mittels der Verbindungsleitung 180 kann somit insbesondere Medium aus dem Niederdruckraum 168 abgeführt und über die Zuführleitung 106 beispielsweise erneut der Hochdruckkammer 104 zugeführt werden.

Auch mittels einer solchen Verbindungsleitung 180 kann vorzugsweise ein Druck im Niederdruckraum 168 reduziert werden.

Bei der in Fig. 3 dargestellten dritten Ausführungsform der Pumpenvorrichtung 100 ist zudem vorgesehen, dass die Kolbenvorrichtung 114 eine Kolbenstange 186 umfasst.

Die Kolbenstange 186 ist insbesondere an dem Kolben 116 festgelegt und dient der Kraftübertragung von dem (in Fig. 3 nicht dargestellten) Betätigungselement auf den Kolben 116.

Die Abdichtung zwischen dem ersten Medienraum 134 und dem zweiten Medienraum 136 erfolgt mittels des Hauptdichtelements 132 vorzugsweise im Bereich der Kolbenstange 186.

Hierbei ist das Hauptdichtelement 132 vorzugsweise mittels eines separaten Gehäusebauteils oder Zusatzbauteils 188 an dem Gehäuse 102 angeordnet und dichtet einerseits radial nach außen zu dem Gehäusebauteil oder Zusatzbauteil 188 und radial nach innen zu der Kolbenstange 186 ab.

Im Übrigen stimmt die in Fig. 3 dargestellte dritte Ausführungsform der Pumpenvorrichtung 100 hinsichtlich Aufbau und Funktion mit der in Fig. 1 dargestellten ersten Ausführungsform überein, so dass auf deren vorstehende Beschreibung insoweit Bezug genommen wird.

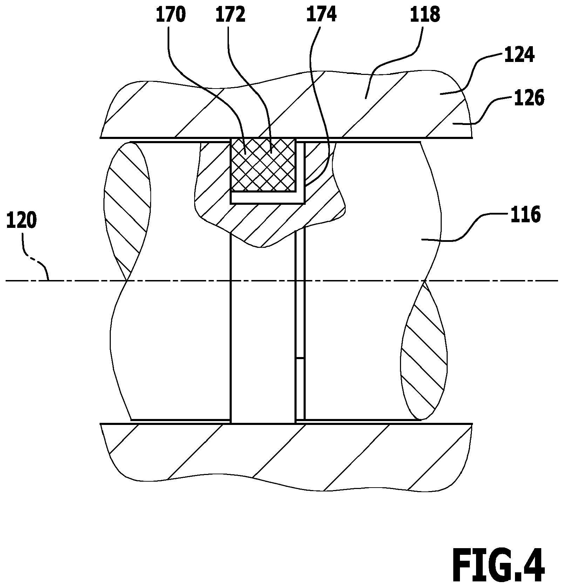

In den Fig. 4 bis 9 sind verschiedene Varianten von Zusatzdichtelementen 170 dargestellt, welche wahlweise für jede der beschriebenen Ausgestaltungen der Pumpenvorrichtung 100 verwendet werden können.

Gemäß der in Fig. 4 dargestellten Ausführungsform ist ein rechteckiger, insbesondere im Wesentlichen quadratischer, Querschnitt des Zusatzdichtelements 170 vorgesehen.

Das Zusatzdichtelement 170 ist dabei vorzugsweise derart dimensioniert oder ausgebildet, insbesondere elastisch ausgebildet, dass dieses mit seiner radial außenliegenden Seite an die Führungsvorrichtung 124 angedrückt wird.

Aufgrund der herrschenden Druckunterschiede zwischen dem Hochdruckraum 166 und dem Niederdruckraum 168 kann vorzugsweise ebenfalls ein Anpressen des Zusatzdichtelements 170 an die Führungsvorrichtung 124 erzielt werden.

Durch geeignete Geometrie des Zusatzdichtelements 170 kann dieser Anpressdruck optimiert werden.

Ferner wird das Zusatzdichtelement 170 vorzugsweise aufgrund der bestehenden Druckdifferenzen zwischen dem Hochdruckraum 166 und dem Niederdruckraum 168 an eine Seite der Nut 174 angepresst. Alternativ oder ergänzend hierzu können vorzugsweise ein oder mehrere Vorspannelemente, beispielsweise ein O-Ring und/oder eine Feder, zum Anpressen des Zusatzdichtelements 170 vorgesehen sein.

Durch die beschriebenen Anpresswirkungen ergibt sich vorzugsweise eine optimale Abdichtung.

Die optimale Abdichtung ist dabei nicht zwingend eine vollständige Abdichtung. Vielmehr kann eine geringe Leckage wünschenswert sein, insbesondere um eine Schmierung des Zusatzdichtelements 170 zur Vermeidung oder Minimierung von Abnutzungseffekten zu erzielen.

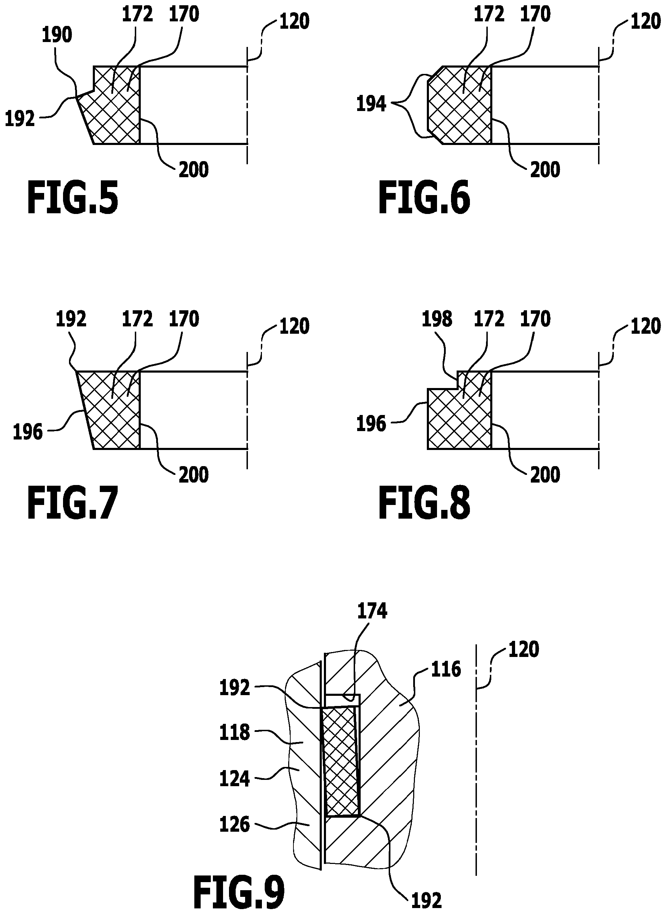

Gemäß der in Fig. 5 dargestellten Ausführungsform des Zusatzdichtelements 170 weist dieses einen radial nach außen ragenden Vorsprung 190 auf, welcher insbesondere eine Dichtkante 192 bildet.

Die Dichtkantenwinkel der Dichtkante 192 sind dabei vorzugsweise so gewählt, dass durch die Bewegung des Kolbens 116 relativ zu der Kolbenaufnahme 118 eine Leckage und somit ein Mediumstrom in Richtung des Hochdruckraums 166 größer ist als in Richtung des Niederdruckraums 168. Hierdurch kann insbesondere eine zumindest geringfügige Rückförderung von aus der Hochdruckkammer 104 entwichenem Medium zurück in die Hochdruckkammer 104 erzielt werden.

Die Dichtkante 192 ist insbesondere im Wesentlichen ringförmig geschlossen ausgebildet.

Gemäß Fig. 6 kann ein Zusatzdichtelement 170 eine oder zwei abgeschrägte Kanten 194 aufweisen. Die abgeschrägten Kanten 194 sind insbesondere radial außenliegende Kanten 194.

Durch die abgeschrägte Ausbildung der Kanten 194 kann insbesondere ein Verschleiß minimiert werden.

Gemäß der in Fig. 7 dargestellten Ausführungsform des Zusatzdichtelements 170 weist dieses eine schräg zur Längsachse 120 ausgerichtete Außenseite 196 auf.

Die Außenseite 196 ist somit insbesondere in der Form einer äußeren Oberfläche eines Kegelstumpfs.

Dies führt insbesondere dazu, dass eine radial äußere Dichtkante 192 spitz zulaufend ausgebildet ist.

Bei verschiedenen Anwendungen kann dies eine optimierte Dichtwirkung und/oder einen minimierten Verschleiß bewirken.

Gemäß der in Fig. 8 dargestellten Ausführungsform des Zusatzdichtelements 170 ist eine gestufte Ausgestaltung vorgesehen.

Eine radial außenliegende Außenseite 196 des Zusatzdichtelements 170 ist dabei insbesondere in einer parallel zur Längsachse 120 verlaufenden Richtung verkürzt ausgebildet und über eine Stufe 198 mit einer vergleichsweise längeren Innenseite 200 verbunden.

Auch hierdurch kann sich eine optimierte Dichtwirkung und/oder ein minimierter Verschleiß bei gewissen Anwendungen ergeben.

Gemäß der in Fig. 9 dargestellten Ausführungsform des Zusatzdichtelements 170 weist dieses im montierten Zustand und/oder im Benutzungszustand vorzugsweise zumindest näherungsweise die Form eine Kegelstumpfmantels auf, so dass sich eine schräg zur Längsachse 120 ausgerichtete Außenseite 196 sowie eine schräg zur Längsachse 120 ausgerichtete Innenseite 200 ergeben.

Dies führt ferner dazu, dass das Zusatzdichtelement 170 mit einer Dichtkante 192 radial nach außen und mit einer weiteren Dichtkante 192 radial nach innen ragt.

Die beiden Dichtkanten 192 bilden somit insbesondere Dichtkanten 192 zur Anlage an der Kolbenaufnahme 118, insbesondere der Führungsvorrichtung 124, bzw. an dem Kolben 116, insbesondere der Nut 174.

Die Zusatzdichtelemente 170 können insbesondere aus einem elastischen PTFE-Material gebildet sein.

Ferner kann das Zusatzdichtelement 170 alternativ oder ergänzend vorzugsweise ein oder mehrere der folgenden Materialien umfassen oder hieraus gebildet sein: Thermoplastisches Material; metallisches Material; Fluorthermoplaste, Hochtemperatur-Thermoplaste, beispielsweise aus der Gruppe der Polyketone und/oder der Gruppe der Polyimide.

Ferner kann vorgesehen sein, dass der Kolben 116 mit einer reibungsreduzierenden und/oder verschleißminimierenden Beschichtung versehen ist.

Die Beschichtung kann beispielsweise eine Diamond-like Carbon-Beschichtung sein.

Die vorstehend genannten Merkmale des Zusatzdichtelements 170 und/oder des Kolbens 116 eignen sich vorzugsweise zur Optimierung sämtlicher Ausführungsformen von Pumpenvorrichtungen 100.

Bei weiteren nicht dargestellten Ausführungsformen von Pumpenvorrichtungen 100 können einzelne oder mehrere Merkmale der vorstehend beschriebenen Ausführungsformen beliebig miteinander kombiniert sein.

Beispielsweise kann die Verbindungsleitung 180 gemäß der in Fig. 3 dargestellten dritten Ausführungsform der Pumpenvorrichtung 100 zur Optimierung der in Fig. 1 dargestellten ersten Ausführungsform verwendet werden.

## Patentansprüche

1. Hochdruck-Kraftstoffpumpenvorrichtung (100), umfassend Folgendes:
- eine Kolbenvorrichtung (114), welche ein Gehäuse (102), das eine Kolbenaufnahme (118) umfasst, einen Kolben (116), der linear verschieblich in der Kolbenaufnahme (118) angeordnet ist, und ein Hauptdichtelement (132), das einen ersten Medienraum (134) von einem zweiten Medienraum (136) trennt, umfasst, wobei die Kolbenvorrichtung (114) ein von dem Hauptdichtelement (132) verschiedenes Zusatzdichtelement (170) zur Abdichtung in einem Bereich zwischen dem Kolben (116) und der Kolbenaufnahme (118) umfasst;
- eine Hochdruckkammer (104), deren freies Innenraumvolumen durch eine lineare Verschiebung des Kolbens (116) alternierend vergrößerbar und verkleinerbar ist;
- eine Zuführleitung (106) zur Zuführung eines ersten Mediums zu der Hochdruckkammer (104);
- eine Abführleitung (108) zur Abführung des ersten Mediums aus der Hochdruckkammer (104),
**dadurch gekennzeichnet, dass**
das Zusatzdichtelement (170) in einer ringförmigen Nut (174) aufgenommen ist, wobei die Nut (174) in dem Kolben (116) angeordnet ist.

2. Hochdruck-Kraftstoffpumpenvorrichtung (100) nach Anspruch 1,
**dadurch gekennzeichnet, dass** die Kolbenaufnahme (118) eine Führungsvorrichtung (124) umfasst, an welcher der Kolben (116) anliegt und mittels welcher der Kolben (116) linear verschieblich geführt ist, wobei das Zusatzdichtelement (170) einerseits an einem Führungselement (126) der Führungsvorrichtung (124) und andererseits an dem Kolben (116) anliegt.

3. Hochdruck-Kraftstoffpumpenvorrichtung (100) nach Anspruch 2, **dadurch gekennzeichnet, dass** das Führungselement (126) als ein Gleithohlzylinder (128) ausgebildet ist.

4. Hochdruck-Kraftstoffpumpenvorrichtung (100) nach einem der Ansprüche 2 oder 3, **dadurch gekennzeichnet, dass** der Kolben (116) zwischen zwei Endstellungen hin und her bewegbar ist, wobei in einer Endstellung des Kolbens (116), in welcher dieser maximal in Richtung des zweiten Medienraums (136) bewegt ist, das Zusatzdichtelement (170) in einem dem zweiten Medienraum (136) zugewandten Endbereich (176) der Führungsvorrichtung (124) angeordnet ist.

5. Hochdruck-Kraftstoffpumpenvorrichtung (100) nach einem der Ansprüche 1 bis 4, **dadurch gekennzeichnet, dass** das Zusatzdichtelement (170) elastisch und/oder als ein ringförmig geschlossener Dichtring, insbesondere als ein ringförmig geschlossener Kolbenring (172), ausgebildet ist.

6. Hochdruck-Kraftstoffpumpenvorrichtung (100) nach einem der Ansprüche 1 bis 5, **dadurch gekennzeichnet, dass** das Zusatzdichtelement (170) einen in einer radialen Richtung nach außen ragenden Vorsprung (190) aufweist, welcher eine Dichtkante (192) zur Anlage des Zusatzdichtelements (170) an der Kolbenaufnahme (118) bildet.

7. Hochdruck-Kraftstoffpumpenvorrichtung (100) nach einem der Ansprüche 1 bis 6, **dadurch gekennzeichnet, dass** der Kolben (116) als ein Plunger (164) ausgebildet ist.

8. Hochdruck-Kraftstoffpumpenvorrichtung (100) nach einem der Ansprüche 1 bis 7, **dadurch gekennzeichnet, dass** das Zusatzdichtelement (170) einen Hochdruckraum (166) des ersten Medienraums (134) von einem Niederdruckraum (168) des ersten Medienraums (134) trennt.

9. Hochdruck-Kraftstoffpumpenvorrichtung (100) nach einem der Ansprüche 1 bis 8, **dadurch gekennzeichnet, dass** die Hochdruck-Kraftstoffpumpenvorrichtung (100) einen ersten Medienraum (134) umfasst, welcher mittels einer Führungsvorrichtung (124) zur Führung des Kolbens (116) und/oder mittels eines Dichtelements in einen Hochdruckraum (166) und einen Niederdruckraum (168) unterteilt ist.

10. Hochdruck-Kraftstoffpumpenvorrichtung (100) nach Anspruch 9, **dadurch gekennzeichnet, dass** der erste Medienraum (134) mittels des Zusatzdichtelements (170) in einen Hochdruckraum (166) und einen Niederdruckraum (168) unterteilt ist.

11. Hochdruck-Kraftstoffpumpenvorrichtung (100) nach einem der Ansprüche 9 oder 10, **dadurch gekennzeichnet, dass** die Hochdruck-Kraftstoffpumpenvorrichtung (100) eine Verbindungsleitung (180) umfasst, mittels welcher Medium aus dem Niederdruckraum (168) abführbar ist.

12. Hochdruck-Kraftstoffpumpenvorrichtung (100) nach einem der Ansprüche 9 bis 11, **dadurch gekennzeichnet, dass** die Hochdruck-Kraftstoffpumpenvorrichtung (100) eine Verbindungsleitung (180) umfasst, welche den Niederdruckraum (168) fluidwirksam mit der Zuführleitung (106) verbindet.

13. Hochdruck-Kraftstoffpumpenvorrichtung (100) nach einem der Ansprüche 11 oder 12, **dadurch gekennzeichnet, dass** die Hochdruck-Kraftstoffpumpenvorrichtung (100) eine der Verbindungsleitung (180) zugeordnete Ventilvorrichtung (182) umfasst, welche derart ausgebildet und/oder angeordnet ist, dass sich diese bei einer Bewegung des Kolbens (116) aus der Hochdruckkammer (104) heraus öffnet und ein im Niederdruckraum (168) angeordnetes Medium über die Verbindungsleitung (180) aus dem Niederdruckraum (168) abführbar und/oder der Zuführleitung (106) zuführbar ist.

## Claims

1. High-pressure fuel pump device (100), comprising the following:
- a piston device (114) which comprises a housing (102) comprising a piston receptacle (118), and which comprises a piston (116) that is arranged in the piston receptacle (118) in a linearly displaceable manner, and a main sealing element (132) that separates a first media space (134) from a second media space (136), the piston device (114) comprising an additional sealing element (170) that is different from the main sealing element (132) and is intended for sealing in a region between the piston (116) and the piston receptacle (118);
- a high-pressure chamber (104) of which the free interior volume can be alternately enlarged and reduced by a linear displacement of the piston (116);
- a supply line (106) for supplying a first medium to the high-pressure chamber (104); and
- a discharge line (108) for discharging the first medium from the high-pressure chamber (104),
**characterized in that**
the additional sealing element (170) is received in an annular groove (174), the groove (174) being arranged in the piston (116).

2. High-pressure fuel pump device (100) according to claim 1, **characterized in that** the piston receptacle (118) comprises a guide device (124) which the piston (116) abuts and by means of which the piston (116) is linearly displaceably guided, the additional sealing element (170) abutting a guide element (126) of the guide device (124) on one side and the piston (116) on the other side.

3. High-pressure fuel pump device (100) according to claim 2, **characterized in that** the guide element (126) is in the form of a sliding hollow cylinder (128).

4. High-pressure fuel pump device (100) according to either claim 2 or claim 3, **characterized in that** the piston (116) can be moved back and forth between two end positions, with, in an end position of the piston (116) in which said piston has been moved maximally in the direction of the second media space (136), the additional sealing element (170) being arranged in an end region (176) of the guide device (124) facing the second media space (136).

5. High-pressure fuel pump device (100) according to any of claims 1 to 4, **characterized in that** the additional sealing element (170) is designed to be resilient and/or is in the form of an annularly closed sealing ring, in particular an annularly closed piston ring (172).

6. High-pressure fuel pump device (100) according to any of claims 1 to 5, **characterized in that** the additional sealing element (170) has a projection (190) which projects outward in a radial direction and which has a sealing edge (192) for the abutment of the additional sealing element (170) on the piston receptacle (118).

7. High-pressure fuel pump device (100) according to any of claims 1 to 6, **characterized in that** the piston (116) is in the form of a plunger (164).

8. High-pressure fuel pump device (100) according to any of claims 1 to 7, **characterized in that** the additional sealing element (170) separates a high-pressure space (166) of the first media space (134) from a low-pressure space (168) of the first media space (134).

9. High-pressure fuel pump device (100) according to any of claims 1 to 8, **characterized in that** the high-pressure fuel pump device (100) comprises a first media space (134) which is divided into a high-pressure space (166) and a low-pressure space (168) by means of a guide device (124) for guiding the piston (116) and/or by means of a sealing element.

10. High-pressure fuel pump device (100) according to claim 9, **characterized in that** the first media space (134) is divided into a high-pressure space (166) and a low-pressure space (168) by means of the additional sealing element (170).

11. High-pressure fuel pump device (100) according to either claim 9 or claim 10, **characterized in that** the high-pressure fuel pump device (100) comprises a connecting line (180) by means of which medium can be discharged from the low-pressure space (168).

12. High-pressure fuel pump device (100) according to any of claims 9 to 11, **characterized in that** the high-pressure fuel pump device (100) comprises a connecting line (180) which fluidically connects the low-pressure space (168) to the supply line (106).

13. High-pressure fuel pump device (100) according to either claim 11 or claim 12, **characterized in that** the high-pressure fuel pump device (100) comprises a valve device (182) which is associated with the connecting line (180) and which is designed and/or arranged in such a way that said valve device opens when the piston (116) moves out of the high-pressure chamber (104), and a medium arranged in the low-pressure space (168) can be discharged from the low-pressure space (168) and/or supplied to the supply line (106) via the connecting line (180).

## Revendications

1. Dispositif de pompe à carburant haute pression (100), comprenant les éléments suivants :
- un dispositif à piston (114) qui comprend un boîtier (102) comprenant un logement de piston (118), un piston (116) disposé de manière à pouvoir se déplacer linéairement dans le logement de piston (118), et un élément d'étanchéité principal (132) séparant une première zone de fluide (134) d'une seconde zone de fluide (136), le dispositif à piston (114) comprenant un élément d'étanchéité supplémentaire (170) différent de l'élément d'étanchéité principal (132) pour assurer l'étanchéité dans une région entre le piston (116) et le logement de piston (118) ;
- une chambre haute pression (104) dont le volume intérieur libre peut être augmenté et diminué alternativement par un déplacement linéaire du piston (116) ;
- une conduite d'alimentation (106) permettant l'alimentation d'un premier fluide à la chambre haute pression (104) ;
- une conduite de décharge (108) permettant la décharge du premier fluide de la chambre haute pression (104),
**caractérisé en ce que**
l'élément d'étanchéité supplémentaire (170) est logé dans une rainure (174) annulaire, la rainure (174) étant disposée dans le piston (116).

2. Dispositif de pompe à carburant haute pression (100) selon la revendication 1, **caractérisé en ce que** le logement de piston (118) comprend un dispositif de guidage (124) sur lequel repose le piston (116) et au moyen duquel le piston (116) est guidé de manière à pouvoir se déplacer linéairement, l'élément d'étanchéité supplémentaire (170) reposant d'une part sur un élément de guidage (126) du dispositif de guidage (124) et d'autre part sur le piston (116).

3. Dispositif de pompe à carburant haute pression (100) selon la revendication 2, **caractérisé en ce que** l'élément de guidage (126) est réalisé sous la forme d'un cylindre creux coulissant (128).

4. Dispositif de pompe à carburant haute pression (100) selon l'une des revendications 2 ou 3, **caractérisé en ce que** le piston (116) peut être déplacé en va-et-vient entre deux positions d'extrémité, l'élément d'étanchéité supplémentaire (170) étant disposé dans une région d'extrémité (176) du dispositif de guidage (124) tournée vers la seconde zone de fluide (136) dans une position d'extrémité du piston (116) dans laquelle ledit piston est déplacé le plus possible dans la direction de la seconde zone de fluide (136).

5. Dispositif de pompe à carburant haute pression (100) selon l'une des revendications 1 à 4, **caractérisé en ce que** l'élément d'étanchéité supplémentaire (170) est réalisé sous forme élastique et/ou sous forme de bague d'étanchéité fermée annulaire, en particulier sous forme de bague à piston fermée annulaire (172).

6. Dispositif de pompe à carburant haute pression (100) selon l'une des revendications 1 à 5, **caractérisé en ce que** l'élément d'étanchéité supplémentaire (170) présente une saillie (190) qui dépasse vers l'extérieur dans une direction radiale et qui forme un bord d'étanchéité (192) pour l'appui de l'élément d'étanchéité supplémentaire (170) contre le logement de piston (118).

7. Dispositif de pompe à carburant haute pression (100) selon l'une des revendications 1 à 6, **caractérisé en ce que** le piston (116) est réalisé sous la forme d'un piston plongeur (164).

8. Dispositif de pompe à carburant haute pression (100) selon l'une des revendications 1 à 7, **caractérisé en ce que** l'élément d'étanchéité supplémentaire (170) sépare une zone haute pression (166) de la première zone de fluide (134) d'une zone basse pression (168) de la première zone de fluide (134).

9. Dispositif de pompe à carburant haute pression (100) selon l'une des revendications 1 à 8, **caractérisé en ce que** le dispositif de pompe à carburant haute pression (100) comprend une première zone de fluide (134), laquelle est divisée en une zone haute pression (166) et en une zone basse pression (168) au moyen d'un dispositif de guidage (124) permettant de guider le piston (116) et/ou au moyen d'un élément d'étanchéité.

10. Dispositif de pompe à carburant haute pression (100) selon la revendication 9, **caractérisé en ce que** la première zone de fluide (134) est divisée en une zone haute pression (166) et en une zone basse pression (168) au moyen de l'élément d'étanchéité supplémentaire (170).

11. Dispositif de pompe à carburant haute pression (100) selon l'une des revendications 9 ou 10, **caractérisé en ce que** le dispositif de pompe à carburant haute pression (100) comprend une conduite de liaison (180) au moyen de laquelle du fluide peut être déchargé de la zone basse pression (168).

12. Dispositif de pompe à carburant haute pression (100) selon l'une des revendications 9 à 11, **caractérisé en ce que** le dispositif de pompe à carburant haute pression (100) comprend une conduite de liaison (180) qui relie de façon fluidiquement fonctionnelle la zone basse pression (168) à la conduite d'alimentation (106).

13. Dispositif de pompe à carburant haute pression (100) selon l'une des revendications 11 ou 12, **caractérisé en ce que** le dispositif de pompe à carburant haute pression (100) comprend un dispositif de soupape (182) associé à la conduite de liaison (180) et conçu et/ou disposé de manière à s'ouvrir lors d'un mouvement du piston (116) hors de la chambre haute pression (104) et de manière qu'un fluide disposé dans la zone basse pression (168) peut être déchargé de la zone basse pression (168) et/ou alimenté vers la conduite d'alimentation (106) par l'intermédiaire de la conduite de liaison (180).
